# DEMANDE DE BREVET EUROPEEN

(11) **EP 0 781 048 A1**
(43) Date de publication de la demande: **25.06.1997**
(21) Numéro de dépôt: 96203526.7
(22) Date de dépôt: 12.12.1996
(51) Int. Cl.: H04N 7/10, H04N 7/20

(54) **Installation de distribution de télévision par câbles**

(30) Priorité: 20.12.1995 FR 9515177
(71) Demandeur: PHILIPS ELECTRONIQUE GRAND PUBLIC, 92150 Suresnes (FR); PHILIPS ELECTRONICS N.V., 5621 BA Eindhoven (NL)
(72) Inventeur: Chanteau, Pierre, 75008 Paris (FR)
(74) Mandataire: Caron, Jean

(57) **Abrégé**

Quatre câbles (1-4) portent chacun une pluralité de signaux reçus par satellite (950-2150 MHz), différents d'un câble à l'autre, et le quatrième câble (4) porte, en plus de signaux reçus par satellite, l'ensemble des signaux reçus à partir de stations terrestres (40-862 MHz). Un ensemble de commutation (86) permet de relier chacune des bornes d'usager (81-84) à l'un des câbles au choix. Les bornes d'usager sont reliées toutes à la fois, par un répartiteur (17, 27, 37, 47) et via un filtre passe-bas (87), dont la fréquence de coupure est de l'ordre de 900 MHz, au quatrième câble (4), de façon à répartir les signaux terrestres sur toutes les bornes à partir d'un seul câble, de façon indépendante de la position du commutateur qui sélectionne un des câbles. Un autre câble (3) est utilisé pour une voie montante, et relié aussi, via un filtre (77), à toutes les bornes à la fois, par un sommateur, qui est constitué par les mêmes résistances que le répartiteur (17, 27, 37, 47).

Applications : distribution de télévision ("MATV").

## Description

La présente invention concerne une installation de distribution de télévision par câbles, comprenant une pluralité de câbles de descente portant chacun une pluralité de signaux reçus par satellite et éventuellement différents d'un câble à l'autre, au moins un dispositif, dit "de desserte", comprenant au moins une borne d'usager destinée à fournir des signaux à un usager, et autant de dérivateurs qu'il y a de câbles, pour dériver, de chaque câble, des signaux correspondant à la pluralité de signaux de ce câble, ainsi qu'au moins un commutateur permettant de relier la borne d'usager à l'un des dérivateurs au choix.

Elle concerne aussi un dispositif de desserte, pour une installation de distribution de télévision par des câbles portant chacun une pluralité de signaux reçus par satellite et éventuellement différents d'un câble à l'autre,
dispositif comprenant au moins une borne d'usager destinée à fournir des signaux à un usager, autant de dérivateurs qu'il y a de câbles, pour dériver, de chaque câble, des signaux correspondant à la pluralité de signaux de ce câble, et au moins un commutateur permettant de relier la borne d'usager à l'un des dérivateurs au choix.

Un réseau de distribution de télévision par câble correspondant au préambule ci-dessus est connu du brevet US 5,382,971. Dans le réseau décrit par ce document, les signaux reçus à partir de stations terrestres sont ajoutés dans chacun des câbles aux signaux reçus par satellite. C'est un moyen ingénieux pour permettre à chaque utilisateur de recevoir les canaux terrestres sans être obligé de choisir un câble particulier parmi la pluralité de câbles, mais il présente l'inconvénient que les câbles sont plus fortement chargés, ce qui réduit les possibilités du système et, entre autres, augmente l'intermodulation apportée dans des amplificateurs.

Un objet de l'invention est de fournir une installation qui évite ces inconvénients et qui, en particulier, autorise aisément la remontée d'informations, sans ajouter de câble.

A cet effet, dans un réseau de distribution de télévision par plusieurs câbles, un seul des câbles, dit "mixte", porte, en plus de signaux reçus par satellite, l'ensemble des signaux reçus à partir de stations terrestres, et un dispositif de desserte comporte un premier filtre passe-bas, dont la fréquence de coupure est située entre la plage de fréquences des signaux reçus à partir de stations terrestres et la plage de fréquences des signaux reçus par satellite, dont l'entrée est reliée à un dérivateur prévu pour dériver des signaux du câble mixte, et dont la sortie est reliée en permanence à la borne d'usager.

L'invention est donc basée sur l'idée de répartir les signaux terrestres sur toutes les bornes à partir d'un seul câble, de façon indépendante de la position du commutateur qui sélectionne un des câbles.

Avec un seul câble transportant les canaux terrestres, il reste de la bande passante disponible sur les autres câbles. Il est alors possible de prévoir la transmission de signaux montants dont les fréquences sont situées en dessous de la plage des fréquences des stations terrestres, signaux montants portés par un des câbles, dit "de voie retour", qui n'est pas le câble mixte, et le dispositif de desserte comporte alors un deuxième filtre passe-bas, dont l'entrée est reliée en permanence à la borne d'usager, et dont la sortie est destinée à être reliée au câble "de voie retour", la fréquence de coupure de ce deuxième filtre passe-bas étant située entre la plage de fréquences prévue pour des signaux montants et la plage de fréquences des signaux reçus par satellite.

Les câbles sont donc, en quelque sorte, spécialisés, et il est ainsi possible d'obtenir de façon particulièrement économique un réseau qui permet la remontée d'informations, des filtres de performances élevées n'étant pas nécessaires.

Pour alimenter différents circuits actifs dans les dispositifs de desserte, l'installation comporte de préférence au moins trois câbles dont l'un, qui n'est ni le câble mixte, ni le câble de voie retour, porte une tension d'alimentation.

Avantageusement, un amplificateur est inséré en série avec le premier filtre passe-bas.

Ainsi, le niveau de signal sur la borne d'usager peut être réglé à toute valeur désirée.

Avantageusement, un premier filtre passe-haut, dont la fréquence de coupure est située entre la plage de fréquences des signaux reçus à partir de stations terrestres et la plage de fréquences des signaux reçus par satellite, est inséré entre celui des dérivateurs qui est prévu pour dériver des signaux du câble mixte, et le commutateur.

Ainsi on évite le mélange de signaux terrestres avec des signaux satellite, dans le commutateur.

Avantageusement, un deuxième filtre passe-haut, dont la fréquence de coupure est située entre la plage de fréquences des signaux montants et la plage de fréquences des signaux reçus par satellite, est inséré entre celui des dérivateurs qui est prévu pour dériver des signaux du câble de voie retour, et le commutateur.

Ainsi on évite le mélange des signaux de la voie retour avec des signaux satellite, dans le commutateur.

De préférence, le dispositif de desserte comporte un troisième filtre passe-haut, dont la fréquence de coupure est située entre la plage de fréquences des signaux montants et la plage de fréquences des stations terrestres, qui est inséré dans la liaison entre la borne d'usager et le câble mixte, du côté de la borne d'usager.

Ainsi on évite la perturbation des canaux terrestres par des signaux destinés à la voie montante.

De préférence, le dispositif de desserte est muni de plusieurs bornes d'usager, et comporte autant de commutateurs que de bornes d'usager, commutateurs dont chacun permet de relier une des bornes d'usager à l'un des dérivateurs au choix, et un répartiteur qui fournit les signaux filtrés par le premier filtre passe-bas à toutes les bornes à la fois.

Dans ce cas l'entrée du deuxième filtre passe-bas est reliée à chacune des bornes d'usager.

Ainsi la voie montante est accessible quelle que soit la borne choisie.

Dans une forme de réalisation préférentielle, l'entrée du deuxième filtre passe-bas est reliée à chacune des bornes d'usager par un sommateur à résistances.

Un tel sommateur est simple et économique.

Avantageusement, le susdit répartiteur est un répartiteur à résistances, dont les résistances constituent à la fois le répartiteur et le sommateur à résistances, l'entrée commune du répartiteur étant aussi la sortie du sommateur.

La combinaison de ces deux moyens procure une économie.

Ces aspects de l'invention ainsi que d'autres aspects plus détaillés apparaîtront plus clairement grâce à la description suivante d'un mode de réalisation constituant un exemple non limitatif.

La figure 1 représente schématiquement un réseau de distribution de télévision par câbles, avec une tête de réseau, des câbles de descente, plusieurs dispositifs de desserte, et des installations d'usager.

La figure 2 représente schématiquement un dispositif de desserte

La figure 3 représente schématiquement un ensemble de commutateurs.

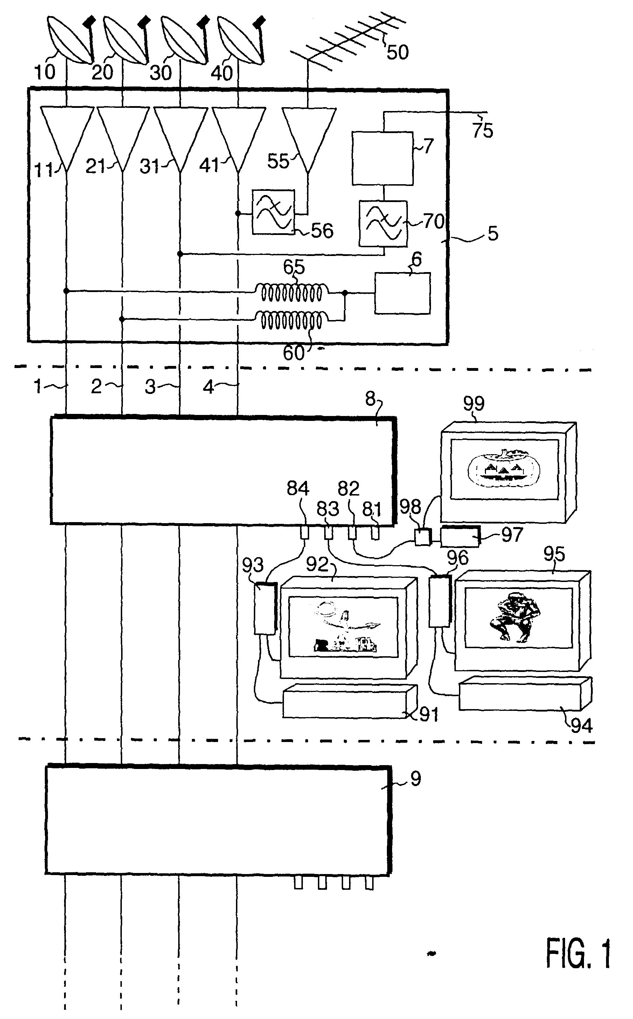

L'installation de distribution de télévision par câbles représentée par la figure 1 comprend une tête de réseau 5. Ici, par exemple, elle est équipée de quatre paraboles de réception satellite 10, 20, 30, 40, et d'une antenne 50 pour la réception de signaux reçus à partir stations terrestres. Chacune des paraboles de réception satellite est associée à un bloc amplificateur et changeur de fréquence à faible bruit, appelé en général "LNB", respectivement 11, 21, 31, 41, dont sortent des signaux dans une gamme de fréquences allant de 950 à 2150 MHz. Ces signaux sont chacun appliqués à un câble de descente différent, respectivement 1, 2, 3, 4. Un nombre suffisant de canaux peut aussi être fourni par des paraboles en nombre inférieur à quatre, les canaux étant alors répartis par un répartiteur sur les quatre câbles de descente.

Les signaux de l'antenne 50 sont amplifiés par un amplificateur 55, couvrant une gamme de fréquences allant de 45 à 862 MHz, et ils sont appliqués au câble de descente 4, via un filtre passe-bas 56 dont la fréquence de coupure est de l'ordre de 900 MHz, c'est-à-dire située entre la plage de fréquences des signaux reçus à partir de stations terrestres et la plage de fréquences des signaux reçus par satellite. Le câble de descente 4 sera appelé "câble mixte" dans la suite, du fait qu'il porte à la fois des signaux reçus par satellite et des signaux reçus à partir de stations terrestres.

Le câble de descente 3 est prévu pour transmettre des signaux montants, c'est-à-dire en retour de la part des usagers ; ce câble de descente 3 sera appelé "de retour" dans la suite. Les fréquences des signaux de retour sont situées dans une gamme de fréquences allant, par exemple, de 5 à 30 MHz, en dessous de la plage des fréquences des stations terrestres. Ces signaux sont transmis, via un filtre passe-bas 70, à un dispositif de gestion des messages montants 7, connu en soi, qui les transmet par exemple sur une ligne téléphonique 75. Une transmission de la voie de retour par un émetteur directif dirigé vers un satellite est également envisageable. La fréquence de coupure du filtre passe-bas 70 est de l'ordre de 35 MHz, c'est-à-dire située au dessus de la plage de fréquences prévue pour des signaux montants et bien au dessous de la plage de fréquences des signaux reçus par satellite. La fréquence de ce filtre pourrait être plus élevée, jusqu'à une fréquence de l'ordre de 860 MHz.

Une alimentation 6 amène sur chacun des câbles de descente 1 et 2, via des inductances respectivement 65 et 60, une tension continue d'alimentation destinée aux différents constituants actifs des dispositifs de desserte. L'alimentation des "LNB", non représentée pour ne pas charger la figure, se fait à partir de l'alimentation 6, directement à l'intérieur de la tête de réseau 5, sans passer par les câbles de descente.

Les câbles de descente 1-4 desservent par exemple un immeuble d'habitation, les lignes en trait mixte symbolisant les plafonds séparant des étages. Les logements d'un même étage, par exemple quatre logements, sont desservis par un même dispositif de desserte 8, ou 9. Un tel dispositif sera décrit plus loin en détail. Il possède quatre connecteurs 81, 82, 83, 84, destinés chacun à desservir un ensemble de réception, et il délivre, sur chacun de ces connecteurs, en plus de signaux reçus par satellite, l'ensemble des signaux reçus à partir de stations terrestres.

Un premier ensemble de réception comprend, par exemple, un boîtier 93, connu, muni de filtres pour fournir, à un récepteur-décodeur 91, les signaux reçus par satellite, et, à un téléviseur 92, les signaux reçus à partir de stations terrestres ; ce boîtier laisse également passer le courant continu ou à basse fréquence. Le récepteur-décodeur 91 est équipé de moyens connus permettant à un usager de communiquer des messages, au moyen de touches appropriées, et de moyens pour envoyer à cet effet, sur le conducteur qui le relie au boîtier 93, des suites de codes numériques représentant les dits messages, modulés dans la gamme de fréquences allant, par exemple, de 5 à 30 MHz. Un deuxième ensemble de réception comprend des éléments analogues respectivement 96, 94, 95. Un troisième ensemble de réception comprend un téléviseur 99, mais pas de récepteur-décodeur. Un boîtier de dialogue 97 est raccordé, à l'aide une boîte de raccordement 98, au conducteur qui relie le téléviseur au dispositif de desserte 8. Ce boîtier de dialogue comprend des moyens, permettant à un usager d'envoyer des messages vers l'extérieur, analogues à ceux du récepteur-décodeur 91. Chacun des récepteurs-décodeurs 91 et 94 comporte en outre un générateur de tension de commande connu, qui engendre, sur le câble qui le relie à la borne respectivement 84 et 83, par exemple une tension de 14 volts pour la sélection du câble de descente 1, de 18 volts pour la sélection du câble de descente 2, de 14 volts avec superposition d'un tension alternative à 22 kHz, pour la sélection du câble de descente 3, et de 18 volts avec superposition d'un tension alternative à 22 kHz, pour la sélection du câble de descente 4. Il en est de même pour le boîtier de commande 97. Les trois ensembles sont représentés côte à côte pour simplifier le dessin, mais il est clair qu'ils sont habituellement plutôt situés dans des logements différents.

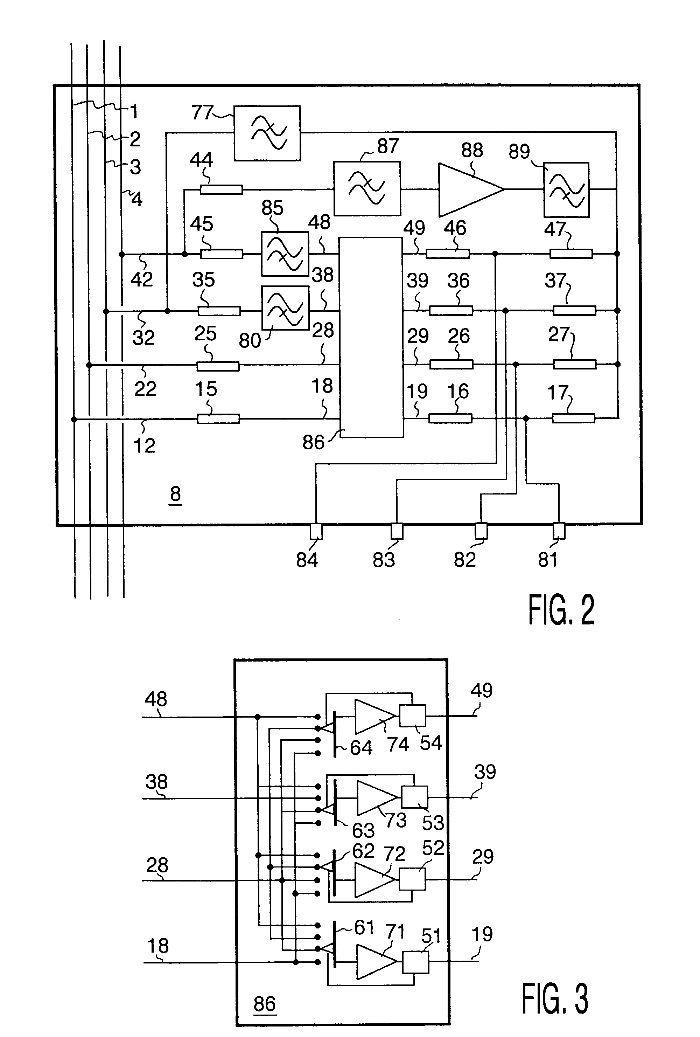

Le dispositif de desserte de la figure 3 comporte les quatre bornes d'usager 81, 82, 83, 84, destinées à fournir des signaux à un usager, et autant de dérivateurs qu'il y a de câbles, c'est-à-dire ici quatre dérivateurs, pour dériver, de chaque câble, des signaux correspondant à la pluralité de signaux de ce câble. Un dérivateur est un circuit connu : pour le réaliser, le choix existe entre, notamment, le dérivateur à résistances, le plus économique, non directif mais qui diminue le niveau du signal, ou le dérivateur à lignes couplées, directif, mais dont la réponse n'est pas toujours assez plate, ou encore le dérivateur à transformateur à ferrite ; n'importe lequel de ces dérivateurs connus convient dans la présente application. Les dérivateurs représentés ici sont de simples résistances 15, 25, 35, 45, qui prélèvent du signal sur des connexions traversantes permettant de faire passer les câbles de descente 1-4 au travers du dispositif de desserte. Chacune des résistances 15, 25, 35, 45 est reliée à une entrée 18, 28, 38, 48 d'un ensemble 86 de commutateurs, qui sera décrit plus loin en détail, permettant de relier chacune des bornes d'usager 81-84 à l'un des dérivateurs au choix. Des résistances 16 à 46 relient les sorties 19 à 49 de l'ensemble de commutateurs 86, respectivement aux bornes d'usager 81-84.

Le câble mixte 4 est relié, via un dérivateur constitué par une résistance 44, à un premier filtre passe-bas 87, dont la fréquence de coupure est de l'ordre de 900 MHz, c'est-à-dire située entre la plage de fréquences des signaux reçus à partir de stations terrestres et la plage de fréquences des signaux reçus par satellite. La sortie de ce filtre 87 est reliée en permanence, via un amplificateur 88 et un autre filtre 89, qui sera décrit plus loin, aux quatre bornes d'usager 81-84, via quatre résistances en éventail, respectivement 17, 27, 37, 47. Ces résistances constituent un répartiteur à résistances qui fournit les signaux filtrés par le premier filtre passe-bas 87 à toutes les bornes 81-84 à la fois.

Le dispositif de desserte comporte en outre des moyens pour relier en permanence les bornes d'usager au câble de voie retour 3. Ces moyens sont constitués par les quatre résistances 17, 27, 37, 47 déjà rencontrées, qui constituent maintenant un sommateur à résistances, dont le point commun, à droite sur la figure, est relié au câble de voie retour 3 via un deuxième filtre passe-bas 77. Sa fréquence de coupure est de l'ordre de 35 MHz, c'est-à-dire située au dessus de la plage de fréquences prévue pour des signaux montants et bien au dessous de la plage de fréquences des signaux reçus par satellite. On remarquera que le répartiteur à résistances qui répartit les signaux issus de l'amplificateur 88, et le sommateur à résistances qui ajoute les signaux issus des bornes d'usager à l'entrée du filtre 77, sont en pratique constitués par les mêmes résistances 17, 27, 37, 47, l'entrée du répartiteur étant aussi la sortie du sommateur.

Un premier filtre passe-haut 85, dont la fréquence de coupure est de l'ordre de 900 MHz, c'est-à-dire située entre la plage de fréquences des signaux reçus à partir de stations terrestres et la plage de fréquences des signaux reçus par satellite, est inséré entre le dérivateur 45, prévu pour dériver des signaux du câble mixte 4, et l'entrée 48 de l'ensemble commutateur 86.

Un deuxième filtre passe-haut 80, dont la fréquence de coupure est de l'ordre de 35 MHz, c'est-à-dire située au dessus de la plage de fréquences des signaux montants et au dessous de la plage de fréquences des signaux reçus par satellite, est inséré entre le dérivateur 35, prévu pour dériver des signaux du câble de voie retour 3, et l'entrée 38 de l'ensemble commutateur 86.

Le filtre 89, qui est inséré entre les bornes d'usager et le câble mixte, plus précisément entre le point commun du répartiteur à résistances 17, 27, 37, 47 et la sortie de l'amplificateur 88, est un filtre passe-haut, dont la fréquence de coupure est de l'ordre de 35 MHz, c'est-à-dire située entre la plage de fréquences des signaux montants et la plage de fréquences des stations terrestres.

L'ensemble commutateur 86 est représenté en détail sur la figure 3. Chacune des connexions d'entrée 18, 28, 38, 48, est reliée à un des quatre "plots" (plots symboliques, puisqu'il s'agit en pratique d'un commutateur électronique) de contact de chacun des commutateurs respectivement 61, 62, 63, 64. Chaque "doigt" de contact (également symbolique) est relié à l'entrée d'un amplificateur, respectivement 71, 72, 73, 74, qui alimente une sortie respectivement 19, 29, 39, 49. Des récepteurs de commande, respectivement 51, 52, 53, 54, décodent les tensions continues de 14 ou 18 volts et/ou les tensions alternatives à 22 kHz, mentionnées plus haut, pour commander la position du commutateur afférent et relier la borne d'usager au dérivateur choisi.

## Revendications

1. Installation de distribution de télévision par câbles, comprenant
- une pluralité de câbles de descente portant chacun une pluralité de signaux
reçus par satellite et éventuellement différents d'un câble à l'autre,
- au moins un dispositif, dit "de desserte", comprenant
- au moins une borne d'usager destinée à fournir des signaux à un usager,
- autant de dérivateurs qu'il y a de câbles, pour dériver, de chaque câble, des signaux correspondant à la pluralité de signaux de ce câble,
- et au moins un commutateur permettant de relier la borne d'usager à l'un des dérivateurs au choix,
**caractérisé en ce qu**'un seul des câbles, dit "mixte", porte, en plus de signaux reçus par satellite, l'ensemble des signaux reçus à partir de stations terrestres, et en ce qu'un dispositif de desserte comporte un premier filtre passe-bas, dont la fréquence de coupure est située entre la plage de fréquences des signaux reçus à partir de stations terrestres et la plage de fréquences des signaux reçus par satellite, dont l'entrée est reliée au câble mixte, et dont la sortie est reliée en permanence à la borne d'usager.

2. Installation de distribution selon la revendication 1, **caractérisé en ce qu**'elle comporte des moyens pour transmettre des signaux montants dont les fréquences sont situées en dessous de la plage des fréquences des stations terrestres, signaux montants portés par un des câbles, dit "de voie retour", qui n'est pas le câble mixte, et des moyens, dans le dispositif de desserte, pour relier en permanence la borne d'usager au câble de voie retour.

3. Installation de distribution selon la revendication 2, **caractérisé en ce qu**'elle comporte au moins trois câbles dont l'un, qui n'est ni le câble mixte, ni le câble de voie retour, porte une tension d'alimentation.

4. Dispositif de desserte, pour une installation de distribution de télévision par des câbles portant chacun une pluralité de signaux reçus par satellite et éventuellement différents d'un câble à l'autre, dispositif comprenant
- au moins une borne d'usager destinée à fournir des signaux à un usager,
- autant de dérivateurs qu'il y a de câbles, pour dériver, de chaque câble, des signaux correspondant à la pluralité de signaux de ce câble,
- et au moins un commutateur permettant de relier la borne d'usager à l'un des dérivateurs au choix,
**caractérisé en ce qu'**il comporte un premier filtre passe-bas, dont la fréquence de coupure est située entre la plage de fréquences des signaux reçus à partir de stations terrestres et la plage de fréquences des signaux reçus par satellite, dont la sortie est reliée à la borne d'usager, et dont l'entrée est reliée à un dérivateur prévu pour dériver des signaux de l'un des câbles, dit "mixte", qui porte, en plus de signaux reçus par satellite, l'ensemble des signaux reçus à partir de stations terrestres.

5. Dispositif de desserte selon la revendication 4, **caractérisé en ce qu'**un amplificateur est inséré en série avec le premier filtre passe-bas.

6. Dispositif de desserte selon l'une des revendications 4 ou 5, **caractérisé en ce qu'**un premier filtre passe-haut, dont la fréquence de coupure est située entre la plage de fréquences des signaux reçus à partir de stations terrestres et la plage de fréquences des signaux reçus par satellite, est inséré entre celui des dérivateurs qui est prévu pour dériver des signaux du câble mixte, et le commutateur.

7. Dispositif de desserte selon l'une des revendications 4 ou 5, **caractérisé en ce qu'**il comporte un deuxième filtre passe-bas, dont l'entrée est reliée à la borne d'usager, et dont la sortie est destinée à être reliée à l'un des câbles, dit "de voie retour" et prévu pour transmettre, en plus de signaux reçus par satellite, des signaux montants dont les fréquences sont situées en dessous de la plage des fréquences des stations terrestres, la fréquence de coupure de ce deuxième filtre passe-bas étant située entre la plage de fréquences prévue pour des signaux montants et la plage de fréquences des signaux reçus par satellite.

8. Dispositif de desserte selon la revendication 7, **caractérisé en ce qu'**un deuxième filtre passe-haut, dont la fréquence de coupure est située entre la plage de fréquences des signaux montants et la plage de fréquences des signaux reçus par satellite, est inséré entre celui des dérivateurs qui est prévu pour dériver des signaux du câble de voie retour, et le commutateur.

9. Dispositif de desserte selon la revendication 7, **caractérisé en ce qu'**il comporte un troisième filtre passe-haut, dont la fréquence de coupure est située entre la plage de fréquences des signaux montants et la plage de fréquences des stations terrestres, qui est inséré dans la liaison entre la borne d'usager et le câble mixte, du côté de la borne d'usager.

10. Dispositif de desserte selon la revendication 4, **caractérisé en ce qu'**il est muni de plusieurs bornes d'usager, et comporte autant de commutateurs que de bornes d'usager, commutateurs dont chacun permet de relier une des bornes d'usager à l'un des dérivateurs au choix, et un répartiteur qui fournit les signaux filtrés par le premier filtre passe-bas à toutes les bornes à la fois.

11. Dispositif de desserte selon la revendication 10, **caractérisé en ce qu'**il comporte un deuxième filtre passe-bas, dont l'entrée est reliée à chacune des bornes d'usager, et dont la sortie est destinée à être reliée à l'un des câbles, dit "de voie retour" et prévu pour transmettre, en plus de signaux reçus par satellite, des signaux montants dont les fréquences sont situées en dessous de la plage des fréquences des stations terrestres, la fréquence de coupure de ce deuxième filtre passe-bas étant située entre la plage de fréquences prévue pour des signaux montants et la plage de fréquences des signaux reçus par satellite.

12. Dispositif de desserte selon la revendication 11, **caractérisé en ce que** l'entrée du deuxième filtre passe-bas est relié à chacune des bornes d'usager par un sommateur à résistances.

13. Dispositif de desserte selon la revendication 12, **caractérisé en ce que** le susdit répartiteur est un répartiteur à résistances, dont les résistances constituent à la fois le répartiteur et le sommateur à résistances, l'entrée commune du répartiteur étant aussi la sortie du sommateur.
